# EUROPÄISCHE PATENTSCHRIFT

(11) **EP 3 596 603 B1**
(45) Veröffentlichungstag und Bekanntmachung des Hinweises auf die Patenterteilung: **05.10.2022**
(21) Anmeldenummer: 18707309.3
(22) Anmeldetag: 16.02.2018
(51) Int. Cl.: G06F 9/455, G06F 9/445, G06F 8/61, G05B 19/042, G06F 9/4401

(54) **VERFAHREN ZUM BETRIEB EINES AUTOMATISIERUNGSSYSTEMS UND NACH DEM VERFAHREN ARBEITENDES AUTOMATISIERUNGSSYSTEM**
METHOD FOR OPERATING AN AUTOMATION SYSTEM AND AUTOMATION SYSTEM OPERATING ACCORDING TO THE METHOD
PROCÉDÉ DESTINÉ AU FONCTIONNEMENT D'UN SYSTÈME D'AUTOMATISATION ET SYSTÈME D'AUTOMATISATION FONCTIONNANT SELON LEDIT PROCÉDÉ

(30) Priorität: 15.03.2017 EP 17161107
(43) Veröffentlichungstag der Anmeldung: 22.01.2020
(73) Patentinhaber: Siemens Aktiengesellschaft, 80333 München (DE)
(72) Erfinder: KAEFER, Gerald, 81739 München (DE); KOHLER, Benjamin, 90419 Nürnberg (DE)
(86) Internationale Anmeldenummer: PCT/EP2018/053898
(87) Internationale Veröffentlichungsnummer: WO 2018/166750

(56) Entgegenhaltungen:
- EP-A2- 1 515 229
- RENNER THOMAS ET AL: "Towards Container-Based Resource Management for the Internet of Things", 2016 INTERNATIONAL CONFERENCE ON SOFTWARE NETWORKING (ICSN), IEEE, 23. Mai 2016 (2016-05-23), Seiten 1-5, XP032917385, DOI: 10.1109/ICSN.2016.7501933
- Duncan Hardie: "How to Get Started Creating Oracle Solaris Kernel Zones in Oracle Solaris 11", , Juli 2014 (2014-07), XP055403985, Gefunden im Internet: URL:http://www.oracle.com/technetwork/arti cles/servers-storage-admin/howto-create-ke rnal-zones-s11-2251331.html#6 [gefunden am 2017-09-05]

## Beschreibung

Die Erfindung betrifft ein Verfahren zum Betrieb eines Automatisierungssystems und allgemein ein Verfahren zum Betrieb eines grundsätzlich beliebigen Computersystems. Im Weiteren betrifft die Erfindung ein nach dem Verfahren arbeitendes Automatisierungssystem bzw. Computersystem sowie ein Computerprogramm mit einer Implementation des Verfahrens.

Die sogenannte Container-Technologie ist ein Standardverfahren zum einfachen Zusammenfassen (Paketieren) und Verteilen von im Folgenden entsprechend dem üblichen Sprachgebrauch kurz als Applikationen bezeichneten Software-Applikationen. Diese Technologie ist für diverse Betriebssysteme, zum Beispiel Windows und Linux, verfügbar. Es gibt jeweils diverse Implementierungen. So hat sich im Linux-Umfeld zum Beispiel die Open-Source-Software "Docker" als Container-Technologie durchgesetzt. Für das Windows-Betriebssystem gibt es sogenannte "Windows-Container".

Zur Kapselung einer Applikation in einem Container umfasst dieser eine komplette, zur Ausführung der jeweiligen Applikation notwendige Laufzeitumgebung (Runtime-Umgebung). Demnach umfasst der Container zum Beispiel alle für die Ausführung der jeweiligen Applikation notwendigen Binär- und Konfigurationsdateien sowie Bibliotheken. Mittels der Kapselung in einem Container werden die Unterschiede in den diversen Betriebssystemdistributionen abstrahiert.

Im Gegensatz zu einer Betriebssystem-Virtualisierung (OS-Virtualisierung) ist die Container-Technologie wesentlich schlanker und benötigt weniger Ressourcen. Bei der OS-Virtualisierung umfasst das dort entstehende Paket eine virtuelle Maschine (VM), das komplette jeweils zu virtualisierende Betriebssystem, insbesondere den jeweiligen Betriebssystem-Kernel, und zumindest eine mittels der virtuellen Maschine auszuführende Applikation. Im Gegensatz dazu teilen sich bei der Container-Technologie alle Container einen gemeinsamen Betriebssystem-Kernel.

Heutige Applikationen (Software-Applikationen) benötigen des Öfteren für deren Ausführung sogenannte Treiber (Treiber-Software). Wenn solche Applikationen in einem Container zusammengefasst und ausgeliefert werden sollen, führt dies oftmals zu einem Problem, denn Treiber werden als sogenannte Kernel-Mode Software in das jeweilige Betriebssystem integriert. Mit heutigen Container-Technologien lässt sich jedoch nur sogenannte User-Mode Software, also Software auf einer anderen, weniger systemnahen/systemkritischen Hierarchiestufe, in eine sogenannte Sandbox abstrahieren. Ein Container der oben beschriebenen Art stellt eine sogenannte Sandbox dar, indem dieser alle für die Ausführung der jeweiligen Applikation notwendigen Daten und Dateien umfasst und die Applikation somit von anderen Applikationen und dem jeweiligen Betriebssystem abgrenzt (Sandbox).

Weil sich alle Container einen gemeinsamen Betriebssystem-Kernel teilen und ein Container keine Berechtigungen hat, Veränderungen im sogenannten Kernel-Space vorzunehmen, kann aktuell Kernel-Mode Software nicht in einem Container verpackt werden. Stattdessen wird bisher die ungleich aufwendigere und ressourcenintensive traditionelle OS-Virtualisierung verwendet, welche direkt auf dem sogenannten Hypervisor aufsetzt. Um eine Applikation, die Kernel-Mode Software verwendet, zu paketieren, muss hierfür neben der jeweiligen Applikation selbst eine virtuelle Maschine (VM) inklusive dem kompletten sogenannten Betriebssystem-Stack verteilt werden.

Dies ist aufwendig und ressourcenintensiv, zum Beispiel wenn das resultierende Paket mit Mitteln der elektronischen Datenübertragung an einen Empfänger oder mehrere Empfänger verteilt wird.

In dem Artikel "Towards Container-Based Resource Management for the Internet of Things", 2016 INTERNATIONAL CONFERENCE ON SOFTWARE NETWORKING (ICSN), IEEE, von Thomas Renner et al. ist eine Kernel Version offenbart, die Docker unterstützt. Dabei stellt Docker voneinander getrennte Ressourcen zur Verfügung. Durch Linux namespaces werden dabei isolierte Container zur Verfügung gestellt. Zudem kann eine Container-Virtualisierung direkt im Kernel erfolgen.

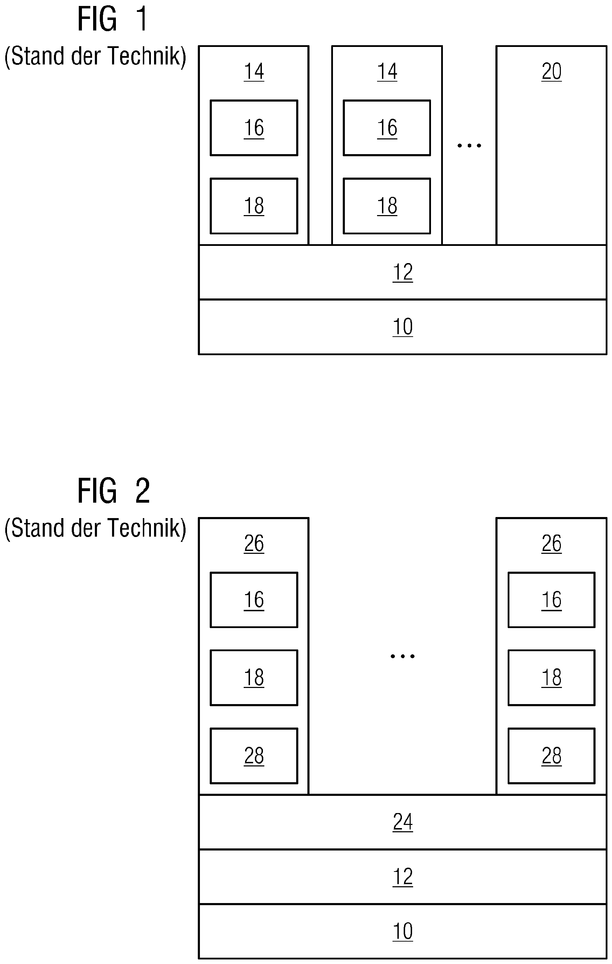

Insbesondere in Figur 1 in "How to Get Started Creating Oracle Solaris Kernel Zones in Oracle Solaris 11", Duncan Hardie, URL:http://www.oracle.com/technetwork/articles/serversstorage-admin/howto-create-kernal-zones-sll-2251331.html#6 ist das Erstellen mehrerer Kernel Zonen offenbart.

Eine Aufgabe der Erfindung besteht entsprechend darin, eine Möglichkeit zum Kapseln einer Applikation, welche Kernel-Mode Software benötigt, in einem Container und zum Ausführen einer solchen Applikation auf einem jeweiligen Zielsystem anzugeben.

Diese Aufgabe wird erfindungsgemäß mittels eines Verfahrens mit den Merkmalen des Anspruchs 1 gelöst. Das Verfahren ist als Verfahren zum Betrieb eines Automatisierungssystems, also zum Beispiel eines zur Steuerung und/oder Überwachung eines technischen Prozesses bestimmten Automatisierungssystems, formuliert und auf dieser Basis wird die weitere Beschreibung fortgesetzt. Der hier vorgeschlagene Ansatz ist aber grundsätzlich für Computersysteme beliebiger Art verwendbar und insofern ist ein Automatisierungssystem nur ein beispielhaftes Computersystem. Entsprechend sind im Folgenden bei jeder Erwähnung des Begriffs Automatisierungssystem auch allgemeinere und nicht oder nicht vornehmlich für Automatisierungszwecke bestimmte Computersysteme mitzulesen.

Bei dem hier vorgeschlagenen Ansatz ist zum Betrieb eines Automatisierungssystems, bei dem eine auf dem Automatisierungssystem auszuführende Applikation in einer in einem Container gekapselten Form zur Verfügung steht, Folgendes vorgesehen: Im Falle einer von der in dem Container gekapselten Applikation benötigten Kernel-Mode Software lädt ein auf dem Automatisierungssystem ausgeführtes und im Folgenden als Host-Extender bezeichnetes Computerprogramm die benötigte Kernel-Mode Software aus einer Datenbasis mit Kernel-Mode Software und installiert diese lokal auf dem Automatisierungssystem. Die lokale Installation der Kernel-Mode Software erfolgt dabei insbesondere in Form einer Integration in einen Kernel eines Betriebssystems des Automatisierungssystems.

Welche Kernel-Mode Software die jeweilige Applikation benötigt und welche Kernel-Mode Software demgemäß aus der Datenbasis zu laden und lokal zu installieren ist, ergibt sich dabei auf Basis von Metadaten, welche der Container mit der jeweiligen Applikation selbst umfasst. Die Metadaten liegen in einer durch den Host-Extender automatisch auswertbaren Kodierung vor, also zum Beispiel in einem XML-Format oder dergleichen.

Für die weitere Beschreibung gilt zur Vermeidung unnötiger Wiederholungen, dass Merkmale und Details, die im Zusammenhang mit dem gegenständlichen Verfahren sowie eventueller Ausgestaltungen beschrieben sind, selbstverständlich auch im Zusammenhang mit und im Hinblick auf ein zur Durchführung des Verfahrens bestimmtes Automatisierungssystem und umgekehrt gelten, so dass das Verfahren auch mittels einzelner oder mehrerer Verfahrensmerkmale fortgebildet sein kann, die sich auf von dem Automatisierungssystem ausgeführte Verfahrensschritte beziehen, und das Automatisierungssystem entsprechend auch durch Mittel zur Ausführung von im Rahmen des Verfahrens ausgeführten Verfahrensschritten fortgebildet sein kann. Entsprechend gelten Merkmale und Details, die im Zusammenhang mit dem gegenständlichen Verfahren und eventuellen Ausgestaltungen beschrieben sind, selbstverständlich auch im Zusammenhang mit und im Hinblick auf ein zur Durchführung des Verfahrens bestimmtes Automatisierungssystem und jeweils umgekehrt, so dass bezüglich der Offenbarung zu den einzelnen Aspekten der Erfindung stets wechselseitig Bezug genommen wird bzw. werden kann.

Die oben genannte Aufgabe wird auch mittels eines Automatisierungssystems gelöst, welches nach dem hier und im Folgenden beschriebenen Verfahren arbeitet und dazu Mittel zur Durchführung des Verfahrens umfasst. Das Verfahren ist zur automatischen Ausführung in Form eines Computerprogramms realisiert und die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Automatisierungssystem mit einer Verarbeitungseinheit in Form von oder nach Art eines Mikroprozessors und einem Speicher, in den als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen. Dabei bedeutet speziell jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software möglich ist. Daher soll für die hier vorgelegte Beschreibung gelten, dass von den Begriffen Software und Computerprogramm auch andere Implementationsmöglichkeiten, nämlich insbesondere eine Implementation in Firmware oder in Firm- und Software, umfasst sind.

Der Vorteil des hier vorgeschlagenen Ansatzes besteht darin, dass die bisherige Container-Technologie erweitert wird, so dass jetzt auch Applikationen, welche Kernel-Mode Software benötigen, in einem Container gekapselt werden können. Die bisherigen Vorteile, wie einfaches Verteilen von Applikationen, schnelles Starten von Containern, effizienter Ressourcenverbrauch und dergleichen, sind mit der Erweiterung der Container-Technologie weiterhin gegeben.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens/des gegenständlichen Automatisierungssystems nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens prüft der Host-Extender beim Löschen eines Containers automatisch, ob im Zusammenhang mit der Ausführung einer von dem Container umfassten Applikation installierte Kernel-Mode Software noch benötigt wird. Wenn sich dabei herausstellt, dass die Kernel-Mode Software nicht mehr benötigt wird, wird sie automatisch durch den Host-Extender oder veranlasst durch den Host-Extender gelöscht. Dies bereinigt nicht nur den Kernel und reduziert dessen Umfang. Das Löschen nicht mehr benötigter Kernel-Mode Software hilft auch, eventuelle Inkompatibilitäten zu vermeiden.

Erfindungsgemäß ist vorgesehen, dass der Host-Extender bei einer Mehrzahl von Containern automatisch eine Kompatibilität der jeweils benötigten Kernel-Mode Software prüft. Auf Basis einer solchen Prüfung kann zumindest sichergestellt werden, dass an sich benötigte Kernel-Mode Software nicht lokal installiert wird, wenn aufgrund einer solchen Installation mit einer Inkompatibilität und demgemäß mit Funktionsstörungen oder Funktionsausfällen zu rechnen ist.

Erfindungsgemäß ist vorgesehen, dass der Host-Extender im Falle einer erkannten Inkompatibilität auf dem Automatisierungssystem eine virtuelle Maschine installiert, den Container, welcher zu der Inkompatibilität geführt hat, in die virtuelle Maschine lädt und die von der von dem Container umfassten Applikation benötigte Kernel-Mode Software in den Kernel der virtuellen Maschine lädt. Dies ermöglicht trotz einer zuvor festgestellten Inkompatibilität die Ausführung der von dem ursächlichen Container umfassten Applikation, indem der Container und die Applikation in einer speziell erzeugten virtuellen Maschine ausgeführt werden. Das Laden der Kernel-Mode Software in den Kernel der virtuellen Maschine betrifft den Kernel des Betriebssystems des Automatisierungssystems nicht und es ergibt sich entsprechend auch keine Inkompatibilität und Funktionsstörungen oder Funktionsausfälle sind nicht zu besorgen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein Schichtenmodell mit einer in einem Container gekapselten Applikation,
- FIG 2: ein Schichtenmodell mit einer in einer virtuellen Maschine gekapselten Applikation,
- FIG 3: ein Schichtenmodell mit einer in einem Container gekapselten Applikation und einem Computerprogramm zur lokalen Installation einer von der Applikation benötigten Kernel-Mode Software,
- FIG 4: eine Datenstruktur zum Löschen von nicht mehr benötigter, lokal installierter Kernel-Mode Software und
- FIG 5: ein Schichtenmodell gemäß FIG 3 mit einer durch das Computerprogramm generierten virtuellen Maschine zum Ausführen einer in der virtuellen Maschine gekapselten Applikation im Falle von Kompatibilitätsproblemen.

Die Darstellung in FIG 1 zeigt - schematisch vereinfacht - in einem Schichtenmodell ein im Folgenden als Server 10 bezeichnetes Gerät/Computersystem, insbesondere ein als Automatisierungssystem zur Steuerung und/oder Überwachung eines grundsätzlich beliebigen und hier nicht gezeigten technischen Prozesses fungierendes Computersystem. Auf der Hardware des Servers 10 setzt ein jeweiliges Betriebssystem 12 auf. Dieses wird im Folgenden mitunter entsprechend dem üblichen Sprachgebrauch auch als Host OS (Host Betriebssystem) bezeichnet. Oberhalb des Betriebssystems 12 sind einzelne Container 14 gezeigt. Diese umfassen jeweils zumindest eine Applikation 16 sowie eine zur Ausführung der jeweiligen Applikation 16 notwendige Laufzeitumgebung 18. Dabei handelt es sich zum Beispiel um Binärdateien und/oder Bibliotheken (Libraries). Ein im Folgenden als Containermanager 20 bezeichnetes ComputerProgramm ermöglicht die Ausführung einer in einem Container 14 gekapselten Applikation 16.

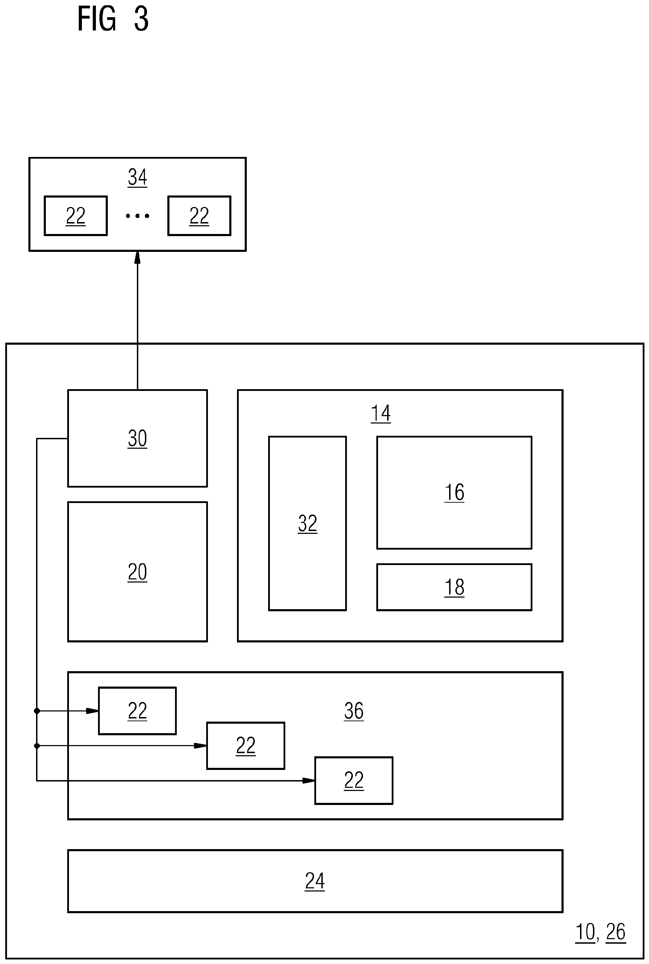

Weil mittels der eingangs erläuterten und in FIG 1 schematisch vereinfacht gezeigten Container-Technologie eine Kapselung von Kernel-Mode Software in einem Container 14 nicht möglich ist, wird zur Kapselung von Applikationen 16, welche für deren Ausführung Kernel-Mode Software 22 (FIG 3) benötigen, zum Beispiel einen sogenannten Treiber, oftmals die traditionelle OS-Virtualisierung verwendet, wie dies schematisch vereinfacht in der Darstellung in FIG 2 gezeigt ist.

Auch dort basiert die Darstellung auf einem Schichtenmodell und zeigt zuunterst die Serverhardware 10 eines jeweiligen Zielcomputersystems und darüber das auf dieser Hardware 10 ablaufende Betriebssystem (Host OS) 12. Ein sogenannter Hypervisor 24 fungiert als Schnittstelle zwischen dem Betriebssystem 12 und einer oder mehreren virtuellen Maschinen (VM) 26. Jede virtuelle Maschine 26 umfasst zumindest eine zur Ausführung innerhalb und mittels der virtuellen Maschine 26 vorgesehene Applikation 16 und das jeweilige Gast-Betriebssystem (Guest OS) 28, das zur Ausführung der Applikation 16 benötigt wird. Die virtuelle Maschine 26 umfasst auch eine eventuelle Laufzeitumgebung 18, insbesondere Binärdateien und/oder Bibliotheken, die zur Ausführung der jeweiligen Applikation 16 benötigt wird bzw. werden.

Aktuelle Implementierungen der Container-Technologie verwenden zum Verwalten der jeweiligen Container 14 und der darin gekapselten Applikationen 16 als zentrale Komponente in dem jeweiligen lokalen System (Zielcomputersystem) den Containermanager 20 (FIG 1). Der Containermanager 20 ist für die Verteilung, Installation und Konfiguration (Deployment) sowie das Starten, Stoppen und Löschen von Containern 14 zuständig.

Der hier vorgeschlagene Ansatz basiert auf einer Erweiterung des Containermanagers 20 um eine im Folgenden als Host-Extender 30 bezeichnete Containermanager-Erweiterung (FIG 3).

Der Host-Extender 30 ist für die Integration von Kernel-Mode Software 22 in einen jeweiligen lokalen Kernel 36 zuständig, damit die Kernel-Mode Software 22 zur Ausführung der von dem Container 14 umfassten Applikation 16 zur Verfügung steht.

Die Darstellung in FIG 3 zeigt einen zur Ausführung auf einer jeweiligen Zielhardware 10 oder alternativ zur Ausführung in einer virtuellen Maschine 26 bestimmten Container 14. Eine zur Ausführung des Containers 14 bestimmte jeweilige Zielhardware 10 oder eine alternativ zur Ausführung des Containers 14 bestimmte virtuelle Maschine 26 werden als Host 10/26 bezeichnet, denn sowohl die zur Ausführung des Containers 14 unmittelbar geeignete Zielhardware 10 wie auch eine auf einer im Grunde beliebigen Zielhardware 10 ablaufende virtuelle Maschine 26 kommen als Plattform zur Ausführung des Containers 14 - also als "Host" - in Betracht.

Auf dem Host 10/26 wird ein als Schnittstelle zur jeweiligen Zielhardware 10 und dessen Betriebssystem 12 oder als Schnittstelle zum Gast-Betriebssystem 28 der jeweiligen virtuellen Maschine 26 fungierender Hypervisor 24 ausgeführt.

Der Host-Extender 30 verarbeitet innerhalb des Containers 14 gekapselte Metadaten 32, welche Abhängigkeiten zwischen der oder einer in dem Container 14 gekapselten Applikation 16 einerseits sowie Kernel-Mode Software 22, zum Beispiel einem Treiber 22 oder einer Mehrzahl von Treibern 22, andererseits definiert. Mittels der Metadaten 32 ist für den Containermanager 20 automatisch erkennbar, ob beim Start eines Containers 14 bestimmte Kernel-Mode Software 22 vorhanden sein oder installiert werden muss. Der Host-Extender 30 ist dabei dafür zuständig, die zur Ausführung einer in dem Container 14 gekapselten Applikation 16 notwendige Kernel-Mode Software 22 auf dem Host 10/26 (Server oder VM) zu installieren, insbesondere in den dortigen Kernel 36 zu integrieren.

Der Host-Extender 30 bezieht die passende (zur Ausführung der jeweiligen Applikation 16 notwendige) Kernel-Mode Software 22 aus einer Datenbasis 34 (Container Extension Hub), welche lokal zur Verfügung steht oder mittels üblicher Mittel zur Datenübertragung, also zum Beispiel im Internet, erreichbar ist. Die Datenbasis 34 umfasst die Kernel-Mode Software 22, die von einem Container 14 mittels der davon umfassten Metadaten 32 referenziert und zur Laufzeit benutzt wird.

Der Host-Extender 30 spielt die zentrale Rolle für das Management der Kernel-Mode Software 22. Beim Starten eines Containers 14 auf dem Host 10/26 wird mittels des Host-Extenders 30 zum Beispiel automatisch geprüft, ob ein benötigter Treiber 22, also benötigte Kernel-Mode Software 22, im Host 10/26 installiert ist. Ergibt die Prüfung, dass die Kernel-Mode Software 22 noch nicht lokal im Host 10/26 installiert ist, veranlasst der Host-Extender 30 die lokale Installation, indem die Kernel-Mode Software 22 aus der Datenbasis 34 geladen und einem Kernel 36 des Hosts 10/26 hinzugefügt wird, wie dies in der Darstellung in FIG 3 gezeigt ist.

Beim Starten einer weiteren Instanz eines Containers 14, welcher dieselbe Kernel-Mode Software 22 zur Ausführung der davon umfassten Applikation 16 benötigt, auf dem Host 10/26 stellt der Host-Extender 30 automatisch fest, dass die benötigte Kernel-Mode Software 22 bereits in den Kernel 36 integriert wurde, so dass der Container 14 unmittelbar gestartet und die davon umfasste Applikation 16 ausgeführt werden kann.

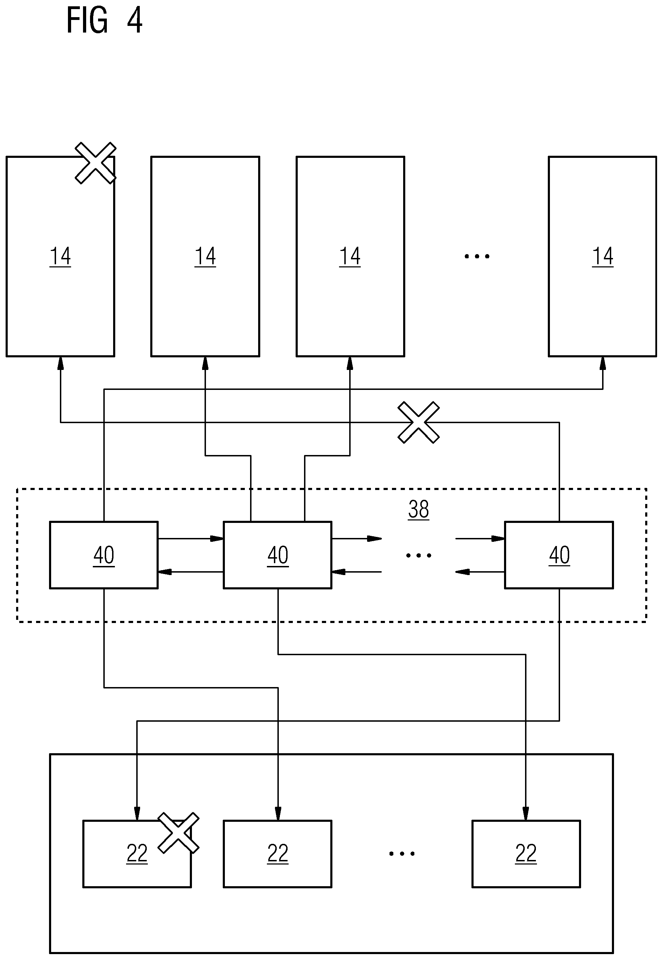

Der Host-Extender 30 verwaltet auch, zum Beispiel in einer verketteten Liste oder einer vergleichbaren Datenstruktur 38, welche Kernel-Mode Software 22 im Zusammenhang mit dem Starten eines Containers 14 in den Kernel 36 integriert wurde. Die Datenstruktur 38 umfasst zum Beispiel für jeden in den Kernel 36 integrierten Treiber 22 (Kernel-Mode Software 22) einen Datensatz 40 (FIG 4) und dieser umfasst wiederum eine Referenz auf den oder jeden Container 14, welcher den jeweiligen Treiber 22 benötigt. Beim Löschen eines Containers 14 wird automatisch durch den Host-Extender 30 anhand der Datenstruktur 38 überprüft, welcher Datensatz 40 oder welche Datensätze 40 diesen Container 14 referenzieren. Die Referenz wird im Zusammenhang mit dem Löschen des Containers 14 gelöscht. Wenn dabei ein Datensatz 40 entsteht, der keinen Container 14 mehr referenziert - dies bedeutet, dass kein Container 14 mehr existiert, welcher den Treiber 22 benötigt, für den der von dem Host-Extender 30 verwaltete Datensatz 40 ursprünglich angelegt wurde - kann der Treiber 22 selbst aus den Kernel 36 gelöscht werden. Der Host-Extender 30 veranlasst dann, dass der jeweilige Treiber 22 deinstalliert (aus den Kernel 36 entfernt) wird.

Die Darstellung in FIG 4 zeigt dies in schematisch vereinfachter Form. Beim Löschen des dort ganz links gezeigten Containers 14 ergibt sich anhand der Datenstruktur 38 der zugehörige Datensatz 40 (nämlich der ganz rechts gezeigte Datensatz 40) und anhand des Datensatzes 40 ergibt sich, welchen Treiber 22 dieser Container 14 benutzt (nämlich den ganz links gezeigten Treiber 22). Weil kein anderer Container 14 denselben Treiber 22 benutzt, kann der Treiber 22 im Zusammenhang mit dem Löschen des Containers 14 ebenfalls gelöscht (deinstalliert) werden. - Die beschriebenen Löschvorgänge sind in der Darstellung in FIG 4 symbolisch mittels einzelner Kreuze dargestellt.

Wenn mehrere unterschiedliche Container 14 auf dem Host 10/26 gestartet werden, wird mittels des Host-Extenders 30 optional automatisch eine Kompatibilität der in Form der Metadaten 32 kodierten Abhängigkeiten der Container 14 von der Kernel-Mode Software 22 geprüft. Wird keine Inkompatibilität festgestellt, so kann die zum Betrieb der Container 14 notwendige Kernel-Mode Software 22 auf dem Host 10/26 nebeneinander installiert werden und die Container 14 können auf dem Host 10/26 ausgeführt werden.

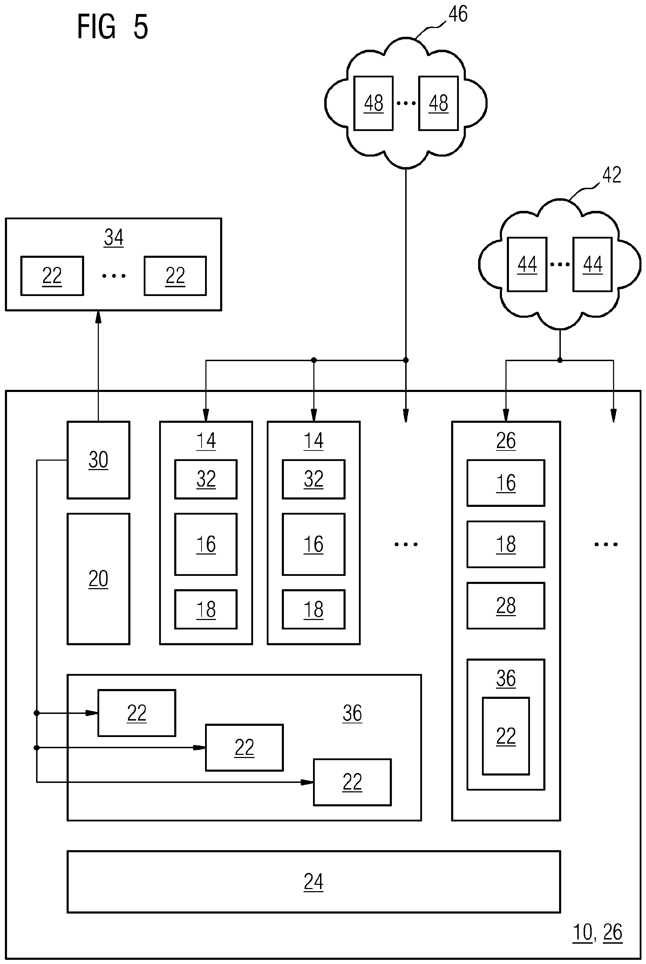

Im Falle einer automatisch mittels des Host-Extenders 30 erkannten Inkompatibilität ist bei einer speziellen Ausführungsform der hier vorgeschlagenen Neuerung vorgesehen, dass der Host-Extender 30 automatisch und dynamisch eine virtuelle Maschine 26 (FIG 5) mit Container-Funktionalität generiert und startet, in welcher nativ (in deren Kernel 36) die Kernel-Mode Software 22 installiert wird, welche zu der ermittelten Inkompatibilität geführt hatte. Anschließend wird - ebenfalls automatisch mittels des Host-Extenders 30 - der Container 14, der zu der ermittelten Inkompatibilität geführt hat, in diese virtuelle Maschine 26 geladen (deployed) und gestartet. Dies ist schematisch vereinfacht in der Darstellung in FIG 5 gezeigt.

Je nach Bedarf werden im Falle einer automatisch festgestellten Inkompatibilität weitere virtuelle Maschinen 26 erzeugt und gestartet. Solange eine Kompatibilität mit der in den Kernel 36 des Hosts 10/26 geladenen Kernel-Mode Software 22 besteht, werden zur Ausführung weiterer Container 14 diese direkt, also ohne eine nochmals kapselnde virtuelle Maschine 26, installiert.

Die automatische Generierung einer virtuellen Maschine 26 oder weiterer virtueller Maschinen durch und mittels des Host-Extenders 30 erfolgt zum Beispiel auf Basis einer weiteren Datenbank 42 (VM Hub), in welcher zum Beispiel Abbilder 44 (Images) unterschiedlicher virtueller Maschinen 26 zur Verfügung stehen. Ein auszuführender Container 14 (FIG 3, FIG 5) kann ebenfalls aus dieser Datenbank 42 oder zum Beispiel aus einer eigenen Containerdatenbank 46 stammen, welche ebenfalls jeweils ein Abbild 48 (Image) eines Containers 14 umfasst. Die Datenbank 42 mit Abbildern 44 virtueller Maschinen 26 und oder die Containerdatenbank 46 mit zumindest einem Abbild 48 eines Containers 14 ist in grundsätzlich an sich bekannter Art und Weise mit üblichen Datenübertragungsmitteln, also zum Beispiel im Internet, erreichbar, so dass ein Abbild 44, 48 aus der jeweiligen Datenbank 42, 46 geladen werden kann und zur Ausführung des hier beschriebenen Ansatzes bedarfsweise geladen wird.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zum Betrieb eines Automatisierungssystems und ein nach dem Verfahren arbeitendes Automatisierungssystem, wobei eine auf dem Automatisierungssystem auszuführende Applikation 16 in einer in einem Container 14 gekapselten Form zur Verfügung steht. Gemäß der hier vorgeschlagenen Neuerung ist dabei vorgesehen, dass im Falle einer von der in dem Container 14 gekapselten Applikation 16 benötigten Kernel-Mode Software 22 ein auf dem Automatisierungssystem ausgeführter Host-Extender 30 die benötigte Kernel-Mode Software 22 aus einer Datenbasis 34 mit Kernel-Mode Software 22 lädt und lokal auf dem Automatisierungssystem installiert. Welche Kernel-Mode Software 22 die jeweilige Applikation 16 benötigt und welche Kernel-Mode Software 22 demgemäß aus der Datenbasis 34 zu laden und lokal zu installieren ist, ergibt sich dabei auf Basis von Metadaten 32, welche der Container 14 mit der jeweiligen Applikation 16 selbst umfasst.

Gibt es bspw. eine Inkompatibilität zwischen Kernel-Mode Software Modulen, so kann das durch den Host-Extender erkannt werden. Eine Inkompatibilität kann explizit über Metadaten eines Containers definiert werden: z.B. Driverl und Driver4 sind nicht side-by-side fähig. In diesem Fall kann der Host Extender über Fallback Mechanismen entsprechend reagieren. Zum einen könnte er einen inkompatiblen Treiber vom Host deinstallieren wenn dieser von keiner Container Instanz aktuell verwendet wird. Verwenden zwei Container jeweils Treiber die miteinander nicht kompatibel sind, so wird dynamisch eine Virtuelle Maschine mit Container Funktionalität gestartet in die, bspw. nativ, der entsprechende inkompatible Treiber installiert wird. Anschließend kann der Container in diese Virtuelle Maschine eingesetzt und/oder gestartet werden. Die Verwaltung der Images der Virtuellen Maschine kann bspw. über einen Virtual Machine Hub erfolgen, in dem Images zur Verfügung stehen.

Dadurch ist es möglich Applikationen zu paketieren die bisher nicht unterstützt wurden. Die bisherigen Vorteile, wie einfaches Verteilen von Anwendungen, schnelles Starten von Containern, effizienter Ressourcenverbrauch, sind mit der Erweiterung der Container Technologie weiterhin gegeben.

Die beschriebene Komponente die das Management der Kernel-Mode Software Module übernimmt kann über entsprechende Fallback-Mechanismen etwaige Inkompatibilitäten auflösen.

Insbesondere kann dadurch die Integration von Kernel-Mode Software in einen lokalen Kernel 36 auf einem zur Ausführung des Containers bestimmten Host ermöglicht werden. Zu diesem Zweck kann eine virtuelle Maschine für den Container erzeugt werden.

## Patentansprüche

1. Verfahren zum Betrieb eines Automatisierungssystems,
wobei eine auf dem Automatisierungssystem auszuführende Applikation (16) in einer in einem Container (14) gekapselten Form zur Verfügung steht und
wobei im Falle einer von der in dem Container (14) gekapselten Applikation (16) benötigten Kernel-Mode Software (22) ein auf dem Automatisierungssystem ausgeführter Host-Extender (30) anhand von von dem Container (14) umfassten Metadaten (32) die benötigte Kernel-Mode Software (22) aus einer Datenbasis (34) mit Kernel-Mode Software (22) lädt und lokal auf dem Automatisierungssystem installiert,
wobei der Host-Extender (30) im Falle einer erkannten Inkompatibilität auf dem Automatisierungssystem eine virtuelle Maschine (26) installiert, den Container (14), welcher zu der Inkompatibilität geführt hat, in die virtuelle Maschine (26) lädt und die von der von dem Container (14) umfassten Applikation (16) benötigte Kernel-Mode Software (22) in den Kernel (38) der virtuellen Maschine (26) lädt,
wobei die lokale Installation der Kernel-Mode Software (22) in Form einer Integration in einen Kernel (36) eines Betriebssystems (12) des Automatisierungssystems erfolgt,
wobei der Host-Extender (30) bei einer Mehrzahl von Containern (14) automatisch eine Kompatibilität der jeweils benötigten Kernel-Mode Software (22) prüft.

2. Verfahren nach Anspruch 1,
wobei der Host-Extender (30) beim Löschen eines Containers (14) automatisch prüft, ob im Zusammenhang mit der Ausführung einer von dem Container (14) umfassten Applikation (16) installierte Kernel-Mode Software (22) noch benötigt wird und diese gegebenenfalls löscht.

3. Computerprogramm (30) mit Programmcodemitteln, um alle Schritte von jedem beliebigen vorangehenden Anspruch durchzuführen, wenn das Computerprogramm (30) auf einem Automatisierungssystem ausgeführt wird.

4. Automatisierungssystem mit einer Verarbeitungseinheit und einem Speicher, in den ein Computerprogramm (30) nach Anspruch 3 geladen ist, das beim Betrieb des Automatisierungssystems zwecks Integration von Kernel-Mode Software (22) in einen lokalen Kernel (36) ausgeführt wird, wobei die Kernel-Mode Software (22) für eine Ausführung einer in einem Container (14) gekapselten Applikation (16) benötigt wird.

## Claims

1. Method for operating an automation system,
wherein an application (16) that is to be run on the automation system is available in a form that is encapsulated in a container (14) and
wherein in the case of kernel mode software (22) that is required by the application (16) that is encapsulated in the container (14), with the aid of the metadata (32) that is stored in the container a host extender (30) that is run on the automation system downloads the required kernel mode software (22) from a database (34) that has kernel mode software (22) and installs said required kernel mode software locally on the automation system,
wherein, in the event of incompatibility being detected on the automation system, the host extender (30) installs a virtual machine (26), loads into the virtual machine (26) the container (14) that has led to the incompatibility and loads into the kernel (38) of the virtual machine (26) the kernel mode software (22) that is required by the application (16) that is packaged in the container (14),
wherein the kernel mode software (22) is installed locally in the form of being integrated into a kernel (36) of an operating system (12) of the automation system, wherein, in the case of a multiplicity of containers (14), the host extender (30) automatically checks the compatibility of the respectively required kernel mode software (22).

2. Method according to claim 1,
wherein, in the case of a container having been deleted, the host extender (30) automatically checks whether, in conjunction with running an application (16) that is packaged in the container (14), the installed kernel mode software (22) is still required and where appropriate deletes said installed kernel mode software.

3. Computer program (30) having program code means in order to perform all the steps of any preceding claim if the computer program (30) is executed on an automation system.

4. Automation system having a processing unit and a storage device, into which a computer program (30) according to claim 3 is loaded, said computer program being executed during the operation of the automation system for the purpose of integrating kernel mode software (22) into a local kernel (36), wherein the kernel mode software (22) is required for running an application (16) that is encapsulated in a container (14).

## Revendications

1. Procédé pour faire fonctionner un système d'automatisation,
dans lequel une application (16) à effectuer sur le système d'automatisation est à disposition sous une forme encapsulée dans un container (14) et
dans lequel, dans le cas d'un logiciel (22) kernel-mode nécessité par l'application (16) encapsulée dans le container (14), un host-extender (30) réalisé sur le système d'automatisation charge, à l'aide de métadonnées (32) comprises par le container (14), le logiciel (22) kernel-mode nécessaire à partir d'une base (34) de données ayant un logiciel (22) kernel-mode et l'installe localement sur le système d'automatisation, dans lequel le host-extender (30) installe, dans le cas d'une détection d'une incompatibilité, une machine (26) virtuelle sur le système d'automatisation, charge le container (14), qui a conduit à l'incompatibilité, dans la machine (26) virtuelle et charge le logiciel (22) kernel-mode, dont a besoin l'application (16) comprise par le container (14), dans le noyau (38) de la machine (26) virtuelle,
dans lequel l'installation locale du logiciel (22) kernel-mode s'effectue sous la forme d'une intégration dans un noyau (36) d'un système (12) de fonctionnement du système d'automatisation,
dans lequel le host-extender (30) contrôle, lorsqu'il y a une pluralité de containers (14), automatiquement la compatibilité du logiciel (22) kernel-mode nécessaire respectivement.

2. Procédé suivant la revendication 1,
dans lequel le host-extender (30) contrôle, lors de l'effacement d'un container (14) automatiquement, si, en relation avec la réalisation d'une application (16) comprise par le container (14), du logiciel (22) kernel-mode installé est encore nécessaire et, le cas échéant, l'efface.

3. Programme (30) d'ordinateur, ayant des moyens de code de programme pour effectuer tous les stades de chaque revendication précédente quelconque, lorsque le programme (30) d'ordinateur est réalisé sur un système d'automatisation.

4. Système d'automatisation comprenant une unité de traitement et une mémoire, dans laquelle est chargé un programme (30) d'ordinateur suivant la revendication 3, qui, lors du fonctionnement du système d'automatisation, est, en vue d'une intégration de logiciel (22) kernel-mode, réalisé dans un noyau (36) local, le logiciel (22) kernel-mode étant nécessaire pour une réalisation d'une application (16) encapsulée dans un container (14) .
